Europäisches Patentamt

European Patent Office

Office européen des brevets

(19)

(11) Veröffentlichungsnummer: **0 237 632**
**B1**

(12) **EUROPÄISCHE PATENTSCHRIFT**

(45) Veröffentlichungstag der Patentschrift:
07.03.90

(51) Int. Cl.⁴: **B60T 17/02**, F02B 77/14,
H02K 7/00

(21) Anmeldenummer: 86116401.0

(22) Anmeldetag: 26.11.86

(54) Antriebseinrichtung für die Pumpe einer Fremdkraft-Fluid-druckbremsanlage.

(30) Priorität: 12.03.86 DE 3608117

(43) Veröffentlichungstag der Anmeldung:
23.09.87 Patentblatt 87/39

(45) Bekanntmachung des Hinweises auf die Patenterteilung:
07.03.90 Patentblatt 90/10

(84) Benannte Vertragsstaaten:
DE FR GB IT

(56) Entgegenhaltungen:
EP-A- 0 085 116
US-A- 4 486 668

(73) Patentinhaber: ALFRED TEVES GmbH,
Guerickestrasse 7 Postfach 90 01 20, D-6000 Frankfurt
am Main(DE)

(72) Erfinder: Schonlau, Jürgen, Steingartenweg 9,
D-6229 Walluf(DE)
Erfinder: Becker, Horst Peter, Holbeinstrasse 12,
D-6000 Frankfurt/Main 70(DE)

(74) Vertreter: Grau, Ulf, c/o ALFRED TEVES GMBH
Guerickestrasse 7, D-6000 Frankfurt (M) 90(DE)

# Beschreibung

Die Erfindung bezieht sich auf eine Antriebseinrichtung für die Pumpe einer Fremdkraft-Fluiddruckbremsanlage eines Kraftfahrzeugs nach dem Oberbegriff des Anspruches 1.

Bei bekannten Anlagen wird die Pumpe einer die Bremskraft hydraulisch oder pneumatisch erzeugenden oder unterstützenden Fremdkraft-Fluiddruckbremsanlage, insbesondere einer Antiblockierbremsanlage, eines Kraftfahrzeugs mit Verbrennungsmotor durch einen aus dem Akkumulator gespeisten eigenen Elektromotor angetrieben. Dies ist aufwendig. Ferner fällt bei einem Ausfall des Elektromotors auch die Fremdkraft weg, sei es eine zusätzlich zur Muskelkraft des Fahrers wirkende Hilfskraft oder die gesamte Bremskraft. Die Folge ist zumindest eine erhebliche Beeinträchtigung der Bremswirkung.

Der Erfindung liegt die Aufgabe zugrunde, eine Antriebseinrichtung der gattungsgemäßen Art anzugeben, die mit einfacheren Mitteln die Aufrechterhaltung der Bremswirkung zuverlässiger ermöglicht.

Erfindungsgemäß ist diese Aufgabe dadurch gelöst, daß die Pumpe mit der Welle der Lichtmaschine antreibbar verbunden ist und daß zwischen dem Antriebsmotor und der Lichtmaschine eine Enwegkupplung und zwischen dem Akkumulator und der Lichtmaschine eine im Stillstand des Antriebsmotors ansprechende Umkehrschalteinrichtung angeordnet ist.

Bei dieser Ausbildung der Antriebseinrichtung entfällt ein eigener Elektromotor für den Pumpenantrieb. Ferner wird bei einem Stillstand des Antriebsmotors des Kraftfahrzeugs während der Fahrt selbsttätig die normalerweise als Generator arbeitende Lichtmaschine als die Pumpe antreibender Elektromotor betrieben, wobei gleichzeitig durch die Umkehrschalteinrichtung dafür gesorgt wird, daß die Richtung des durch die Lichtmaschine fließenden Stroms umgekehrt wird und daher die Lichtmaschine mit der gleichen Drehrichtung wie vor dem Stillstand des Motors weiterläuft und die Pumpe in der gleichen Drehrichtung wie vorher antreibt, während die Einweg-Kupplung gleichzeitig selbsttätig den Antriebsmotor von der Lichtmaschine abkuppelt. Auf diese Weise wird zumindest ein Notbetrieb der Bremsanlage aufrechterhalten, wenn das Fahrzeug seine Fahrt bei Stillstand des Antriebsmotors fortsetzt.

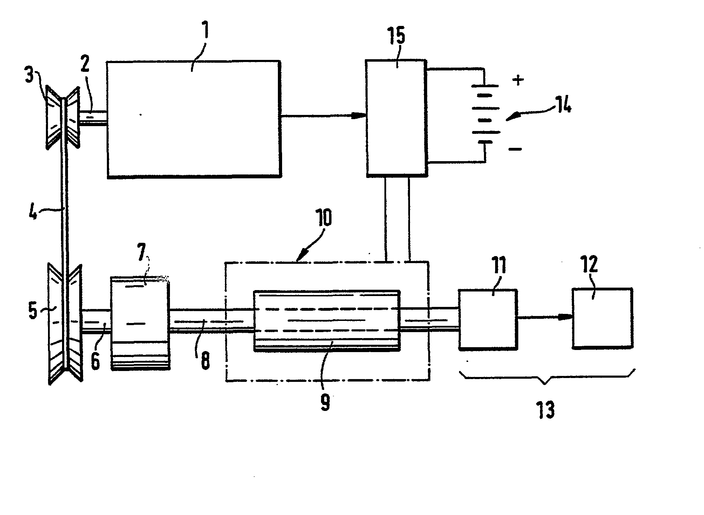

Die Zeichnung stellt ein Ausführungsbeispiel der Antriebseinrichtung schematisch dar.

Der als Verbrennungsmotor ausgebildete Antriebsmotor 1 eines im übrigen nicht dargestellten Kraftfahrzeugs, beispielsweise eines Personenkraftwagens, treibt normalerweise über eine auf seiner Welle 2 befestigte Keilriemenscheibe 3, einen Keilriemen 4 und eine weitere Keilriemenscheibe 5, die auf einer Welle 6 befestigt ist, sowie über eine Einweg-Kupplung 7 die Antriebswelle 8 und damit den darauf befestigten Läufer 9 einer Licht maschine 10 an. Mit der Welle 8 ist ferner eine Pumpe 11 gekuppelt, die hydraulisch die Bremskraft einer mit Muskelkraft betätigten Bremseinrichtung 12 einer Fremdkraft-Fluiddruckbremsanlage 13 unterstützt.

Die Lichtmaschine 10 speist im Betrieb des Antriebsmotors 1 einen Akkumulator 14 über eine Umkehrschalteinrichtung 15, die in Abhängigkeit vom Betrieb des Antriebsmotors 1 gesteuert wird und bei stillstehendem Antriebsmotor 1 die Verbindung zwischen Lichtmaschine 10 und Akkumulator 14 umpolt, so daß die Lichtmaschine 10 nunmehr nicht als Generator, sondern als Motor betrieben wird, der in der gleichen Drehrichtung wie vorher während des Generatorbetriebs läuft und die Pumpe 11 antreibt, während der Antriebsmotor 1 aufgrund seines Stillstands durch die Einweg-Kupplung 7 selbsttätig von der Lichtmaschine 10 abgekuppelt wird.

Auf diese Weise ist die Bremsanlage weiterhin betriebsfähig, selbst wenn der die Pumpe 11 normalerweise über das Getriebe 2 bis 8 antreibende Antriebsmotor 1 ausgeschaltet wird oder ausfällt und das Kraftfahrzeug seine Fahrt bei stehendem Antriebsmotor 1 fortsetzt, beispielsweise bergab.

## Patentansprüche

1. Antriebseinrichtung für die Pumpe einer Fremdkraft-Fluiddruckbremsanlage eines Kraftfahrzeugs, dessen Antriebsmotor eine einen Akkumulator speisende Lichtmaschine antreibt und die Energie für den Antrieb der Pumpe zur Erzeugung des die Fremdkraft bestimmenden Fluiddrucks liefert, wobei die Pumpe durch einen vom Akkumulator gespeisten elektrischen Motor antreibbar ist, dadurch gekennzeichnet, daß die Pumpe (11) mit der Welle (8) der Lichtmaschine (10) antreibbar verbunden ist und daß zwischen dem Antriebsmotor (1) und der Lichtmaschine (10) eine Einwegkupplung (7) und zwischen dem Akkumulator (14) und der Lichtmaschine (19) eine im Stillstand des Antriebsmotors (1) ansprechende Umkehrschalteinrichtung (15) angeordnet ist.

## Claims

1. A drive unit for the pump of an auxiliary-force fluid pressure brake system of an automotive vehicle, the drive motor of which drives a generator feeding an accumulator and supplies the energy for the drive of the pump to generate the fluid pressure determining the auxiliary force, the said pump being drivable by an electric motor energized by the accumulator, characterized in that the pump (11) is connected with the shaft (8) of the generator (10) so as to be driven, and in that interposed between the drive motor (1) and the generator (10) is a one-way clutch (7), while interposed between the accumulator (14) and the generator (19) is a reversing switch arrangement (15) responding during standstill of the drive motor (1).

## Revendications

Dispositif de commande de la pompe d'un système de freinage assisté à pression de fluide pour un véhicule automobile dont le moteur d'entraînement entraîne une dynamo et fournit l'énergie pour entraîner la pompe afin de produire la pression de fluide déterminant la force d'assistance, la pompe pouvant être entraînée par un moteur électrique alimenté par un accumulateur, caractérisé en ce que la pompe (11) est reliée à l'arbre (8) de la dynamo (10) de manière à pouvoir être entraînée, et en ce que, entre le moteur d'entraînement (1) et la dynamo (10), est disposé un embrayage unidirectionnel (7) et, entre l'accumulateur (14) et la dynamo (19), un dispositif d'inversion (15) déclenché lorsque le moteur d'entraînement (1) est à l'arrêt.